# EUROPEAN PATENT SPECIFICATION

(11) **EP 2 889 476 B1**
(45) Date of publication and mention of the grant of the patent: **28.09.2016**
(21) Application number: 14199895.5
(22) Date of filing: 22.12.2014
(51) Int. Cl.: F03D 80/30, F03D 1/06, H02G 13/00

(54) **Wind turbine lightning protection system and corresponding wind turbine rotor**
Blitzschutzsystem einer Windturbine und entsprechender Windturbinenrotor
Système de protection contre la foudre d'une turbine éolienne et rotor de turbine éolienne

(30) Priority: 27.12.2013 JP 2013272843
(43) Date of publication of application: 01.07.2015
(73) Proprietor: MITSUBISHI HEAVY INDUSTRIES, LTD., Tokyo 108-8215 (JP)
(72) Inventor: Fujioka, Hideyasu, Tokyo, 108-8215 (JP); Feberwee, Nils, 23558 Lübeck (DE)
(74) Representative: Intès, Didier Gérard André

(56) References cited:
- WO-A1-2013/084374
- DE-U1-202006 000 673
- US-A1- 2005 254 949
- US-A1- 2012 162 850

## Description

### TECHNICAL FIELD

The present disclosure relates to a wind turbine rotor and a wind turbine having lightning-protection function.

### BACKGROUND

In recent years, a wind turbine utilizing wind force has become widely used from the viewpoint of preserving the global environment. A wind turbine normally includes a wind turbine rotor having a hub and a plurality of blades attached to the hub, a nacelle supporting the wind turbine rotor to be freely rotatable, and a tower to which the nacelle is mounted on its upper end. A wind turbine being a power generating facility converts kinetic energy of wind into rotation energy of the wind turbine rotor and then converts this rotation energy into electric power at a generator.

In such a wind turbine, the size of a wind turbine rotor has been increased recently in order to improve the efficiency. When the diameter of a wind turbine rotor is increased, normally, the entire length of the tower also increases. As a result, the wind turbine rotor is disposed at a position (level) at a great distance from the ground surface. Also, a wind turbine rotor is often disposed at a high level for the purpose of effective recovery of the wind energy, and it is also often installed on a vast land or ocean where it is likely to receive wind, which raises the risk of being damaged by lightning strikes. Thus, lightning-protection design for wind turbine rotors has become increasingly important.

For instance, Patent Documents 1 to 3 disclose various configurations for blades having lightning protection. Specifically, Patent Documents 1 to 3 disclose blades configured to direct lightning current to blade roots from receptors (lightning-receiving units) disposed on blade tips via down conductors of a sheet-like shape or a mesh-like shape.

### Citation List

### Patent Literature

Patent Document 1: US2008/145229
Patent Document 2: US7883321
Patent Document 3: US2010/0329865

WO 2013/084374 discloses a lightning current transfer system for a wind turbine generator.

### SUMMARY

### Technical Problem

As described in Patent Documents 1 to 3, most of conventional lightning-protection systems provided for wind turbine rotors mainly protect the blades from lightning strikes. Especially, in a wind turbine with great rotor diameter, lightning-protection measures for blades have been exclusively regarded as important because the tip ends of the blades of the wind turbine pass through the highest level as the rotor rotates.

However, when the diameter of a wind turbine rotor is increased and the blades are elongated, the distance between the tip ends of adjacent blades in fact increases, raising the possibility of being unable to capture lightning with receptors on the blades even if the receptors are disposed on the tip ends of the blades, for instance. Also, depending on the stopped position (for instance, the Y position or the anti-Y position) of a wind turbine rotor, lightning may not hit the receptor of a blade due to the angular position of the blades. As described above, direction of lightning varies depending on the environmental conditions or the like, and lightning does not necessarily hit a blade.

The possibility that lightning hits a part other than blades of a wind turbine rotor, however; has been hardly considered in the conventional designs.

With regard to the above issues, an object of at least one embodiment of the present invention is to provide a wind turbine rotor and a wind turbine which are capable of protecting the wind turbine rotor from lightning which hits a part other than blades of the wind turbine rotor.

### SUMMARY

In at least one embodiment of the present invention, a wind turbine rotor defined by claim 1, supported on a nacelle of a wind turbine to be freely rotatable, includes: at least two blades; a hub to which the at least two blades are attached; a spinner disposed so as to cover the hub, the spinner including an insulating material; a blade lightning-protection system provided for each of the at least two blades; and a spinner lightning-protection system provided for the spinner, the spinner lightning-protection system including at least one receptor. The at least one receptor is disposed so that, when being projected on a rotational plane of the wind turbine rotor, at least a part of the at least one receptor being projected is positioned within an angular range corresponding to a circular-arc region between blade root portions of adjacent two of the at least two blades, the circular-arc region being a portion of a virtual circle, on the rotational plane, passing through the blade root portions of the at least two blades. Also, the at least one receptor is disposed so that, when being projected on a plane including a rotation axis of the wind turbine rotor, at least a part of the at least one receptor being projected is positioned at a front side with respect of the blade root portions of the at least two blades, the front side being a hub side and a rear side being a nacelle side in an axial direction of the rotation axis.

The above wind turbine rotor includes the spinner lightning-protection system provided separately from the blade lightning-protection system and the at least one receptor is disposed on the spinner as the spinner lightning-protection system, which makes it possible to protect the wind turbine rotor from lightning strikes that have not been captured by the blade lightning-protection system. That is, the receptor of the spinner lightning-protection system is disposed so that, when being projected on the rotational plane of the wind turbine rotor, at least a part of the receptor being projected is positioned within the angular range corresponding to the circular-arc region between the blade root portions of adjacent two of the at least two blades. The circular-arc region is a portion of the virtual circle, on the rotational plane, passing through the blade root portions. In this way, it is possible to capture lightning that has passed through between the blades by the receptor of the spinner lightning-protection system. Also, the at least one receptor of the spinner lightning-protection system is disposed so that, when being projected on the plane including the rotation axis of the wind turbine rotor, at least a part of the receptor being projected is positioned at a front side with respect of the blade root portions of the blades. In this way, it is possible to capture lightning that passes through the front region of the wind turbine rotor by the receptor of the spinner lightning-protection system. Moreover, it is possible to protect electrical devices disposed in the spinner or the hub from lightning strikes by the spinner lightning-protection system.

In some embodiments, the wind turbine rotor further includes a conductive member disposed in the spinner, the conductive member being electrically connected to the hub. The at least one receptor includes a first receptor disposed on an outer circumferential surface of the spinner at a front side with respect to the hub and the conductive member.

According to the above embodiment, the first receptor is disposed on the outer circumferential surface of the spinner at the front side with respect to the conductive member electrically connected to the hub, which makes it possible to prevent lightning that passes through the front region of the wind turbine rotor from directly hitting the conductive member. As a result, it is possible to protect the hub and various components in the spinner including the conducting member electrically connected to the hub from lightning strikes. Further, it is possible to prevent lightning current not only from flowing into components disposed in the spinner but also from flowing through the hub into various components (for instance, a main bearing of the main shaft of the wind turbine coupled to the hub of the wind turbine rotor) of the wind turbine disposed elsewhere.

In one embodiment, the first receptor has a circular shape, an annular shape, or a circular-arc shape, centered at the rotation axis.

As a result, it becomes possible to capture lightning passing through the region over a broad range at the front of the wind turbine rotor by the first receptor, and to achieve the lightning-protection function of the first receptor in a broad range of the stopped position of the wind turbine rotor.

In some embodiments, the wind turbine rotor further includes a conductive member disposed in the spinner, the conductive member being electrically connected to the hub. The at least one receptor includes at least one second receptor disposed on the outer circumferential surface of the spinner around the hub and the conductive member.

According to the above embodiment, the second receptor is disposed on the outer circumferential surface of the spinner around the conductive member electrically connected to the hub, which makes it possible to prevent the conductive member from being directly hit by lightning passing through the outer circumferential (lateral) region around the hub. As a result, it is possible to protect the hub and various components in the spinner including the conducting member electrically connected to the hub from lightning strikes. Further, it is possible to prevent lightning current not only from flowing into components disposed in the spinner but also from flowing through the hub into various components (for instance, a main bearing of the main shaft of the wind turbine coupled to the hub of the wind turbine rotor) of the wind turbine disposed elsewhere.

In one embodiment, the at least one receptor includes a plurality of the second receptors disposed in a discretely-distributed fashion in a circumferential direction centered at the rotation axis. Also, each of the second receptors is disposed so that, when being projected on the rotational plane of the wind turbine rotor, said each second receptor being projected is positioned within an angular range between the blade root portions of adjacent two of the at least two blades.

As describe above, lightning passing through the vicinity of the blades of the wind turbine rotor is likely to be captured by the blade lightning-protection system, though there is a possibility that lightning that passes through the angular range between the blade root portions of adjacent blades does not get captured by the blade lightning-protection system and reaches the spinner. Thus, as in the above described embodiment, arranging each second receptor so that the projected position of each second receptor is within the angular range between the blade root portions of adjacent blades makes it possible to effectively capture lightning by the second receptor, the lightning not having been captured by the blade lightning-protection system. Further, the second receptors are disposed in a discretely-distributed fashion in the circumferential direction centered at the rotation axis, which makes it possible to reduce the weight of the wind turbine rotor by reducing the size of the second receptors.

Further, in one embodiment, each second receptor has a shape in which a size in a first direction is larger than a size in a second direction orthogonal to the first direction. Also, each second receptor is disposed on the outer circumferential surface of the spinner so that the first direction is along a front-rear direction.

As a result, it is possible to extend the outer circumferential (lateral) region around the hub, where the lightning-protection function of the second receptors is effective, in the front-rear direction. Thus, it becomes possible to capture lightning passing through the region over a broad range on the side of the hub by the second receptors, which makes it possible to further improve the lightning-protection function of the wind turbine rotor.

In the present invention, the at least one receptor is disposed on the outer circumferential surface of the spinner.

Embedding the receptors in the spinner as described above makes it possible to prevent the receptors from considerably projecting outward from the spinner, and thus to reduce aerodynamic loss due to the receptors.

In some embodiments, the spinner lightning-protection system includes: a receptor set including a plurality of the receptors electrically connected to one another; and at least one first cable for connecting to a grounding current path of the wind turbine rotor.

As described above, the plurality of receptors are electrically connected with one another. Thus, it is no longer necessary to provide the first cable connected to the grounding current path for each receptor individually, which makes it possible to standardize the first cables and associated devices. However, the number of the first cables is not limited to one and may be more than one in order to enable usage of cables having relatively low cable ampacity, or to make the cables redundant to improve reliability of the lightning-protection system.

In the present description, an "electrically connected" state includes a case where two objects to be connected are continuously connected via a conducting body and a case where a slight gap is disposed in a path between the two objects, the gap being so slight that the two objects are no more electrically isolated so that electric discharge is allowed when lightning current flows between the two objects.

In one embodiment, the receptor set includes: a first receptor which is continuous in the circumferential direction centered at the rotation axis; and a plurality of second receptors disposed in a discretely-distributed fashion in the circumferential direction centered at the rotation axis, at a rear side with respect to the first receptor. The blade lightning-protection system includes: a plurality of the first cables for electrically connecting respective ones of the second receptors to the grounding current path; and a plurality of second cables for electrically connecting respective ones of the second receptors and the first receptor with each other.

In the above embodiment, the plurality of second receptors are disposed in a discretely-distributed fashion in the circumferential direction and adjacent two second receptors are not in electrical connection with each other directly, but the second receptors are electrically connected with one another via the second cables and the first receptor. Also, a first cable is provided for each of the second receptors electrically connected to one another. Thus, when any one of the second receptors is hit by lightning, lightning current from the hit second receptor flows into not only the first cable of the hit second receptor but also into the first cables of other second receptors, so that the lightning current is distributed. That is, instead of providing a plurality of the first cables for each second receptor, the first cables provided for the other second receptors that are not hit by lightning are utilized so as to make it possible to reduce the maximum lightning current flowing through each first cable when one of the second receptors is hit by lightning.

In some embodiments, the receptor is disposed so as to be electrically isolated from a conductive member disposed in the spinner.

As a result, it is possible to prevent lightning current from flowing into the conductive member from the receptors, and to protect the conductive member disposed in the spinner from lightning strikes.

In some embodiments, the receptor includes a stainless material including an antireflection covering layer.

In the above embodiment, it is possible to maintain high corrosion resistance of the receptor even in severe circumstances by using a stainless material, and also to suppress reflection of sun lights by the antireflection covering layer, thereby reducing influence of reflection on the airplanes caused by the receptors.

In some embodiments, the receptor includes a copper material at least a part of which is a covered by a corrosion-resistant covering layer.

As a result, it is possible to provide receptors having corrosion resistance and high conductivity and excellent lightning-protection performance.

In some embodiments, the spinner includes non-conductive fiber-reinforced plastic.

As a result, it is possible to improve the possibility that lightning hits the receptors of the spinner lightning-protection system.

In some embodiments, the hub includes cast steel, and the receptor is electrically isolated from the hub.

As a result, it is possible to prevent lightning current from flowing into the hub or the conductive member from the receptors, and to protect the hub and various components in the spinner including a conductive member electrically connected to the hub.

A wind turbine according to at least one embodiment of the present invention includes: a wind turbine rotor including at least two blades and a hub to which the at least two blades are attached; a nacelle to which the wind turbine rotor is supported to be freely rotatable; a spinner disposed so as to cover the hub, the spinner including an insulating material; a blade lightning-protection system provided for each of the at least two blades; and a spinner lightning-protection system provided for the spinner, the spinner lightning-protection system including at least one receptor. The at least one receptor is disposed so that, when being projected on a rotational plane of the wind turbine rotor, at least a part of the receptor being projected is positioned within an angular range corresponding to a circular-arc region between blade root portions of adjacent two of the at least two blades, the circular-arc region being a portion of a virtual circle, on the rotational plane, passing through the blade root portions of the at least two blades. Also, the at least one receptor is disposed so that, when being projected on a plane including a rotation axis of the wind turbine rotor, at least a part of the receptor being projected is positioned at a front side with respect of the blade root portions of the at least two blades, the front side being a hub side and a rear side being a nacelle side in an axial direction of the rotation axis.

According to the above wind turbine, the spinner lightning-protection system is provided separately from the blade lightning-protection system and the at least one receptor is disposed on the spinner as the spinner lightning-protection system, which makes it possible to protect the wind turbine rotor from lightning strikes that have not been captured by the blade lightning-protection system or the like. That is, it is possible to capture lightning that has passed through between the blades and lightning that passes through the front region of the wind turbine rotor by the receptor of the spinner lightning-protection system. Further, it is possible to protect electrical devices in the spinner or the hub from lightning strikes by means of the spinner lightning-protection system.

According to at least one embodiment of the present invention, a spinner lightning-protection system is provided separately from a blade lightning-protection system and at least one receptor is disposed on a spinner as the spinner lightning-protection system, which makes it possible to protect a wind turbine rotor from lightning strikes that have not been captured by the blade lightning-protection system. Further, it is possible to protect electrical devices in the spinner or a hub from lightning strikes by means of the spinner lightning-protection system.

### BRIEF DESCRIPTION OF DRAWINGS

FIG. 1 is a schematic diagram of an overall configuration of a wind turbine according to one embodiment.
FIG. 2 is a perspective view of a wind turbine rotor according to one embodiment.
FIG. 3 is a perspective view of an example of a divided structure of a spinner according to one embodiment.
FIG. 4 is a planar view of an exemplary configuration of a blade having a blade lightning-protection system according to one embodiment.
FIG. 5 is a side view of an exemplary configuration of a grounding electric-current path according to one embodiment.
FIGs. 6A to 6C are front views of arrangements of spinner receptors according to different embodiments.
FIG. 7 is a perspective view of an overall configuration of a spinner lightning-protection system according to one embodiment.
FIG. 8 is a cross-sectional view of an example of an installed spinner lightning-protection system according to one embodiment, taken along the line G-G from FIG. 7.
FIG. 9 is a perspective view of an attached state of a second receptor and cables according to one embodiment.
FIG. 10 is a perspective view of an attached state of a cable according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

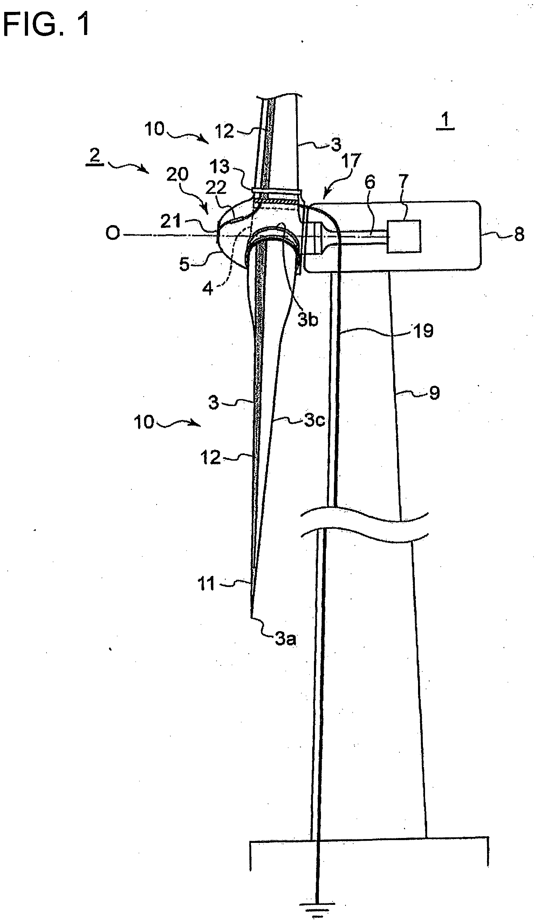

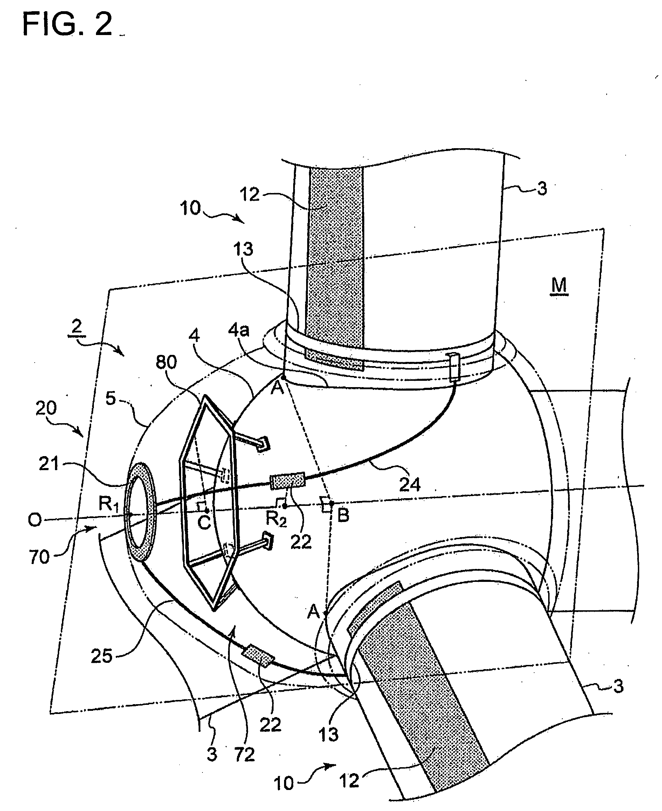

Referring to FIGs. 1 and 2, an overall configuration of a wind turbine according to one embodiment will now be described. FIG. 1 is a schematic diagram of an overall configuration of a wind turbine according to one embodiment. FIG. 2 is a perspective view of an exemplary configuration of a wind turbine rotor according to one embodiment. Although a wind turbine power generating apparatus having a generator is described in the following embodiments as an example of a wind turbine, a wind turbine according to the embodiment of the present invention may be employed in any kind of apparatus as long as the apparatus is configured capable of converting wind force energy into driving force.

As illustrated in FIG. 1, a wind turbine 1 includes a wind turbine rotor 2 which rotates upon receiving wind, a main shaft 6 coupled to a hub 4, and a generator 7 which generates electric power using rotation energy of the main shaft 6. The wind turbine 1 may also include a drive train (not illustrated) for transmitting rotation energy of the main shaft 6 to the generator 7. In this case, a hydraulic transmission or a gear box may be used as the drive train, for instance.

Further, various devices including the main shaft 6 are housed in a nacelle 8. The nacelle 8 supports the wind turbine rotor 2 thereon to be rotatable.

The wind turbine rotor 2 according to some embodiments has the following configuration.

The wind turbine rotor 2 includes at least two blades 3, a hub 4 to which the at least one blades 3 is attached, and a spinner 5 covering the hub 4. Although the present embodiment illustrates three blades 3 attached to the hub 4, the number of the blades 3 may be two, or more than three.

Each blade 3 includes a blade tip portion 3a, a blade root portion 3b, and an airfoil portion 3c disposed between the blade tip portion 3a and the blade root portion 3b. Also, a part of each blade 3 may be made of fiber-reinforced plastic such as glass-fiber-reinforced plastic (GFRP) and carbon-fiber-reinforced plastic (CFRP).

The hub 4 includes blade attachment portions 4a to which the blade root portions 3b are attached via pitch bearings (not illustrated). The hub 4 normally includes conductive material, such as cast steel.

A variety of conductive members are arranged around the hub 4. As illustrated in FIG. 2, as an exemplary configuration of the conductive members, a supporting structure 80 for supporting the spinner 5 on the hub 4 will be described. The supporting structure 80 includes conductive material such as steel, and is mounted to the hub 4. In other words, it has an electrically connected relationship with the hub 4. Thus, when lightning current flows through the supporting structure 80, the lightning current flows into the main shaft 6 through the hub 4, which may damage the main bearing for supporting the main shaft 6. Accordingly, a conductive member electrically connected to the hub 4 is in a positional relationship such that the conductive member is electrically isolated from the spinner receptors, which will be described below. Besides, conductive members include work scaffoldings, piping and cooling devices, for instance. Also, in the present description, an "electrically isolated" state includes a case where two members (for instance, a spinner receptor and the supporting structure 80) to be isolated are apart from each other by a sufficient distance for isolation, and also a case where two members have an insulator interposed therebetween.

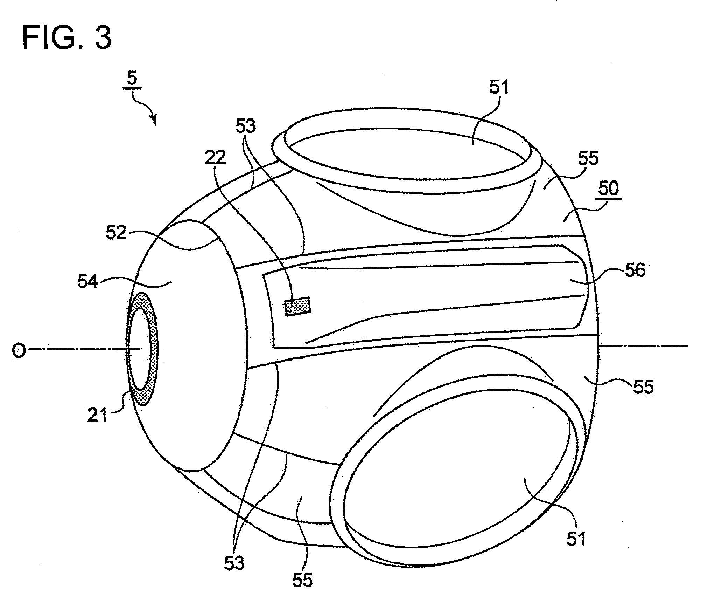

The spinner 5 is disposed so as to cover the hub 4, and configured to rotate with the blades 3 and the hub 4. The spinner 5 includes insulating material. Specifically, the spinner 5 may include non-conductive fiber-reinforced plastic, such as glass-fiber-reinforced plastic (GFRP). Also, as illustrated in FIG. 3, the spinner 5 may be divided into a plurality of sections 54, 55 by dividing lines 52, 53. In a specific configuration, the spinner 5 is divided into a front section 54 and a side section 55 by a front dividing line 52 positioned in a plane that is substantially orthogonal to the rotation axis O of the wind turbine rotor 2. Further, the side section 55 is divided by side dividing lines 53 that extend in the front-rear direction of the wind turbine rotor 2. Specifically, the side dividing lines 53 are arranged at substantially equal intervals in the circumferential direction centered at the rotation axis O, delimiting a plurality of side sections 55, 55, and so on. Here, the front-rear direction of the wind turbine rotor 2 is a direction indicating the hub 4 side as the front and the main shaft 6 (nacelle 8) side as the rear, in the direction along the rotation axis O. However, the front-rear direction of the wind turbine rotor 2 may not be necessarily parallel to the rotation axis O. For instance, while the side dividing lines 53 of the spinner 5 extend along the front-rear direction of the wind turbine rotor 2, the side dividing lines 53 are curved along the outer surface of the spinner 5. Also, at least one of the side sections 55, 55, and so on may include a projecting portion 56 having at least a part that protrudes outward. In this case, it is desirable to form the projecting portion 56 to have a smoothly-curving aerodynamic form for reducing aerodynamic loss due to the projecting portion 56. The space inside the projecting portion 56, i.e., the space between the projecting portion 56 and the hub 4 may be used as the work space for maintenance or the like, for instance.

The wind turbine rotor 2 further includes a blade lightning-protection system 10 provided for each blade 3 and a spinner lightning-protection system 20 provided for the spinner 5.

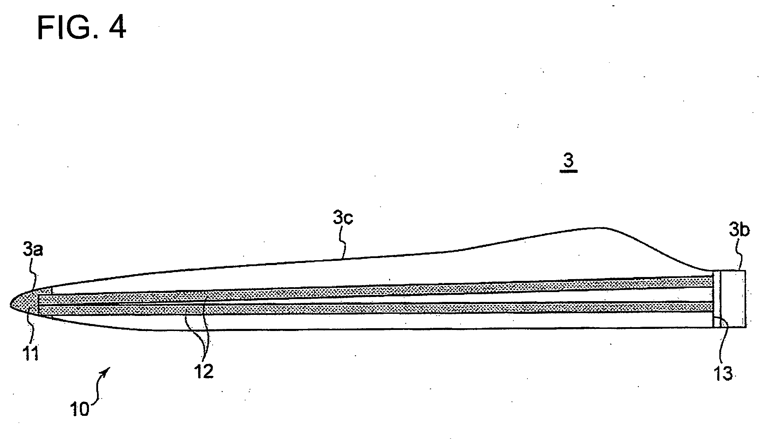

FIG. 4 illustrates an exemplary configuration of a blade having a blade lightning-protection system.

In one embodiment, the blade lightning-protection system 10 includes a blade receptor 11 disposed on the blade tip portion 3a of each blade 3, a metal foil 12 electrically connected to the blade receptor 11, and a discharge ring 13 being an electric-current transmitting part electrically connected to the metal foil 12. In the present description, an "electrically connected" state includes a case where two objects to be connected are continuously connected via a conducting body and a case where a slight gap is disposed in a path between the two objects, the gap being so slight that the two objects are no more isolated and allow electric discharge when lightning current flows between the two objects.

The blade receptor 11 includes parts having conductivity. A blade receptor 11 in one exemplary configuration is made of material mainly including copper or copper alloy, and the outer surface is covered by a corrosive-resistant covering layer. The corrosive-resistant covering layer may be formed by applying corrosive-resistant coating material on the main material, or by applying corrosive-resistant film on the main material. A blade receptor 11 in another exemplary configuration is made of material mainly including stainless steel, and the outer surface is covered by an antireflection covering layer. The antireflection covering layer may also be corrosion resistant. Naturally, the blade receptor 11 may include stainless material not covered by the antireflection covering layer. Also, the blade receptor 11 may be a solid receptor embedded in the blade tip portion 3a of the blade 3 so as to form at least a part of the blade tip portion 3a.

The metal foil 12 is configured to transmit lightning current from the blade receptor 11 to the grounding electric-current path 17 on the nacelle 8. side, also functioning as a down conductor of the blade 3 for directing lightning current from the blade tip portion 3a toward the blade root portion 3b of the blade 3. In an exemplary configuration, the metal foil 12 is electrically connected to the blade receptor 11 at one end, and electrically connected to the discharge ring 13 at the other end, so as to extend in the blade airfoil portion 3c of the blade 3 along the blade length direction (blade axial line direction). As the metal foil 12, copper foil is used, for instance. In another exemplary configuration, a mesh-like metal sheet such as copper mesh sheet may be used as the metal foil 12. Specifically, the metal foil 12 may cover the outer surface of a spar cap of the blade 3 in order to protect the spar cap. That is, the blade 3 includes an outer skin member for forming the blade airfoil portion 3c, a shear web (beam member) disposed between the suction side and the pressure side of the outer skin member and extending in the blade length direction, and a spar cap (main reinforcing member) disposed between the shear web and the outer skin member and extending in the blade length direction. In a case where the spar cap includes carbon-fiber-reinforced plastic (CFRP), for instance, the metal foil 12 is disposed at a position for covering the spar cap, and the metal foil 12 and the spar cap are electrically isolated from each other. Further, in a case where a spar cap is disposed on each of the leading edge side and the trailing edge side of the blade 3 at each of the suction side and the pressure side of the blade 3, the metal foil 12 is also disposed on each of the leading edge side and the trailing edge side, so that two metal foils 12 are disposed on each of the suction side and the pressure side of the blade 3 as illustrated in FIG. 4, which makes four metal foils 12 in total.

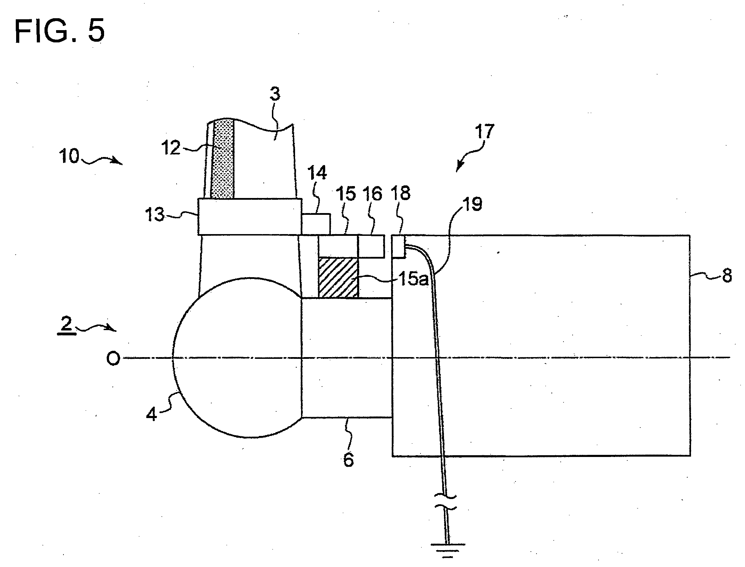

The discharge ring 13 is disposed on the blade root portion 3b of each blade 3 and functions as an electric-current transmitting part for transmitting lightning current from the blade receptor 11 to the grounding electric-current path 17 on the nacelle 8 side. In an exemplary configuration, the discharge ring 13 is electrically connected to one end of the metal foil 12, and also electrically connected to the grounding electric-current path 17 on the nacelle 8 side. Here, the blade 3 is configured to rotate in the pitch direction with respect to the hub 4, while the wind turbine rotor 2 is configured to rotate around the rotation axis O with respect to the nacelle 8. Thus, it may be necessary to have a configuration for constantly maintaining the electrical connection between two members (for instance, a blade and a nacelle) which are in a rotating relationship relative to each other. An example of such a configuration will be described below in reference to FIG. 5.

FIG. 5 is a side view of an exemplary configuration of a grounding current path according to one embodiment.

The first conducting body 14 is attached to the discharge ring 13. The first conducting body 14 is disposed so as to protrude outward from the discharge ring 13 and configured to rotate in the pitch direction along with the discharge ring 13. The second conducting body 15 is attached to the main shaft 6 (or the hub 4) via an insulator 15a. The first conducting body 14 is arranged to be in contact slidably with respect to the second conducting body 15, so that the contacting state between the first conducting body 14 and the second conducting body 15 is always maintained throughout the movable range of the blade 3 in the pitch direction. A discharge part 16 which protrudes toward the nacelle 8 is attached to the second conducting body 15. On the other hand, a receiving part 18 is disposed on the nacelle 8. The receiving part 18 is arranged to face the discharge part 16 via a gap such that lightning current can be discharged therebetween. Further, the receiving part 18 is disposed to correspond to the track followed by the discharge part 16 during rotation of the wind turbine rotor 2.

Further, lightning current from the blade receptor 11 (see FIG. 4) flows into the discharge ring 13 through the metal foil 12, and then flows from the discharge ring 13 to the discharge part 16 through the first conducting body 14 and the second conducting body 15. At this time, even when the blade 3 rotates in the pitch direction, it is possible to maintain the electric connection between the devices on the blade 3 side and the devices on the hub 4 side because the first conducting body and the second conducting body are always in contact with each other. Still further, the electric current, which has flowed into the discharge part 16, is discharged from the discharge part 16 and transmitted to the receiving part 18, and then directed into the ground or the water through the down conductor 19. At this time, in spite of the rotation of the wind turbine rotor 2, a certain gap is constantly maintained between the discharge part 16 and the receiving part 18, which makes it possible to maintain the electric connection between the devices on the wind turbine rotor 2 side and the devices on the nacelle 8 side.

Next, the spinner lightning-protection system 20 will be described in detail.

In some embodiments, the spinner lightning-protection system 20 includes spinner receptors (including the first receptor 21 and the second receptor 22) and cables 24, 25.

The spinner receptors are arranged to be electrically separated from the hub 4. In this way, it is possible to prevent lightning current transmitted from the spinner receptors from flowing into the hub 4 or a conductive member, and to protect the hub 4 and the various components in the spinner 5 from lightning, the components including the conductive member electrically connected to the hub 4. Also, the spinner lightning-protection system 20 may include a receptor set having a plurality of spinner receptors.

Further, the spinner receptors may include a plurality of spinner receptors disposed on different positions on the spinner 5, i.e., at least one first receptor 21 and at least one second receptor 22. As a result, it is possible to capture lightning that passes through the region over a broad range around the hub 4 by means of the spinner receptors, which makes it possible to further improve the lightning-protection performance of the wind turbine rotor 2.

As illustrated in FIG. 2, the spinner receptors (including the first receptor 21 and the second receptors 22) are arranged so that, when projected on a plane M including the rotation axis O of the wind turbine rotor 2, at least a part of the first receptor 21 and second receptors 22 being projected is positioned on the front side with respect to the blade root portions 3b of the blades 3. That is, the first receptor 21 and the second receptors 22 are arranged so that the projected points of the first receptor 21 and the second receptors 22 projected on the plane M are positioned on the front side in the front-rear direction of the wind turbine rotor 2 with respect to the points A projected on the plane M, the points A being the foremost points of the blade root portions 3b of the blades 3. More specifically, when perpendicular lines extend from the points A positioned the foremost of the blade root portions 3b of the blades 3 perpendicularly to the rotation axis O to intersect with the rotation axis O, the intersection point here is determined as the intersection B. Also, when perpendicular lines extend from the first receptor 21 and the second receptors 22 perpendicularly to the rotation axis O to intersect with the rotation axis O, the intersection points here are determined as the intersections R₁, R₂, respectively. In this case, the first receptor 21 and the second receptors 22 are disposed so that their intersections R₁, R₂, are positioned at the front side with respect to the intersection B of the front end of the blade root portions 3b. While FIG. 2 illustrates a case where the first receptor 21 and the second receptors 22 are entirely positioned at the front side with respect to the blade root portions 3b of the blades 3, only a part of the first receptor 21 and the second receptors 22 may be disposed at the front side with respect to the blade root portions 3b. Further, when a plurality of spinner receptors are provided, at least one of the spinner receptors may be positioned at the front side with respect to the blade root portions 3b, and the remaining spinner receptors may be disposed at the rear side with respect to the front end of the blade root portions 3b.

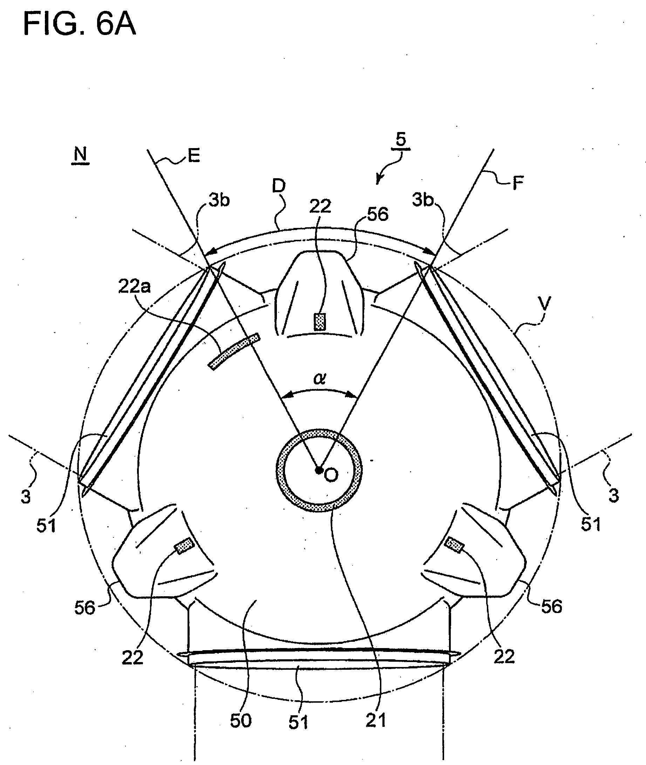

In addition to the above configuration, as illustrated in FIG. 6A, the spinner receptors (the first receptor 21 and the second receptors 22) are disposed so that at least a part of the projected first receptor 21 and second receptors 22 is positioned in the angular range α corresponding to the circular-arc region D between the blade root portions 3b of adjacent two of the blades 3, the circular-arc region D being a part of a virtual circle V, on the rotational plane N, passing through the blade root portions 3b of at least two blades 3 when being projected on the rotational plane N of the wind turbine rotor 2. The virtual circle V is a circle which is centered ad the rotation axis O of the wind turbine rotor 2 and which passes through the blade root portions 3b of at least two blades 3.

Specifically, in the rotational plane N of the wind turbine rotor 2, the angular range α is an angle formed between the lines E, F connecting the rotation axis O of the wind turbine rotor 2 and the respective points of the blade root portions 3b of adjacent two blades 3 closest to the adjacent blade 3. In this case, the first receptor 21 and the second receptors 22 are disposed so that at least a part of the first receptor 21 and the second receptors 22 is positioned within the angular range α. However, with regard to the second receptors 22, while FIG. 6A illustrates a case where each second receptor is entirely positioned within the angular range α, the second receptors 22 may be positioned so as to be partially positioned within the angular range α like the spinner receptor 22a. Further, with regard to the first receptor 21, while the drawing illustrates a case where the first receptor is partially positioned within the angular range α, the first receptor may be entirely positioned within the angular range α. Moreover, when a plurality of spinner receptors are provided, there may be at least one spinner receptor partially positioned within the angular range α, and the remaining spinner receptors may be positioned outside of the angular range α.

According to the above embodiment, the spinner lightning-protection system 20 is provided separately from the blade lightning-protection system 10, including the spinner receptors (including the first receptor 21 and the second receptors 22). Thus, it is possible to protect the wind turbine rotor 2 from lightning that has not been captured by the blade lightning-protection system 10 or the like. That is, the spinner receptors are positioned so that at least a part of the projected spinner receptors is positioned within the angular range α between the blade root portions 3b of adjacent blades 3 when being projected on the rotational plane N of the wind turbine rotor 2. As a result, it is possible to capture lightning having passed through between blades 3 by the spinner receptors. Also, the spinner receptors are disposed so that at least a part of the projected spinner receptors are positioned at the front side with respect to the blade root portions 3b of the blades 3 when being projected on the plane M including the rotation axis O of the wind turbine rotor 2. As a result, it is possible to capture lightning passing through the region in front of the wind turbine rotor 2 by the spinner receptors. Accordingly, it is possible to protect the electrical devices disposed inside the spinner 5 or the hub 4 by the spinner lightning-protection system 20.

Further, the spinner receptors (including the first receptor 21 and the second receptors 22) may include the following configuration.

As illustrated in FIG. 2 and 6A, the spinner receptors include the first receptor disposed on the outer circumferential face of the spinner 5 in the front region 70 which is a region at the front side with respect to the hub 4 and a conductive member (the supporting structure 80, for instance) disposed inside the spinner 5 and electrically connected to the hub 4. In FIG. 2, the supporting structure 80 is illustrated as a conductive member electrically connected to the hub 4. When a perpendicular line extends from the foremost point of the hub 4 and the supporting structure 80 perpendicularly to the rotation axis O to intersect with the rotation axis O, the intersection here is determined as the intersection C. In this case, the first receptor 21 is disposed at the front side with respect to the intersection C. Also, in a case where the hub 4 is positioned the foremost from among the hub 4 and the conductive member electrically connected to the hub 4, the first receptor 21 is disposed so as to be positioned at the front side with respect to the foremost end of the hub 4.

As described above, the first receptor 21 is disposed on the outer circumferential face of the spinner 5 at the front side with respect to the conductive member electrically connected to the hub 4. Thus, it is possible to prevent lightning passing through the front region 70 of the wind turbine rotor 2 from directly striking the conductive member. As a result, it is possible to protect the hub 4 and the various components inside the spinner 5 from lightning, the components including the conductive member electrically connected to the hub 4. Further, it is possible to prevent lightning current not only from flowing into the components disposed inside the spinner 5, but also from flowing through the hub 4 into various components (for example, the main bearing of the main shaft 6 of the wind turbine 1 coupled to the hub 4 of the wind turbine rotor 2) disposed on different positions in the wind turbine 1.

As illustrated in FIGs. 2 and 6A, the spinner receptors include the second receptors 22 disposed on the outer circumferential face of the spinner 5 in the side region 72 which is a region around the hub 4 and a conductive member (the supporting structure 80, for instance) disposed inside the spinner 5 and electrically connected to the hub 4. The second receptors 22 are disposed at the rear side with respect to the first receptor 21. That is, each receptor 21, 22 is positioned so that the center point, in the direction of the rotation axis O, of each second receptor 22 is positioned at the rear side with respect to the center point, in the direction of the rotation axis O, of the first receptor 21. In an exemplary configuration, the second receptors 22 illustrated in FIG. 2 are disposed at the rear side with respect to the intersection C and at the front side with respect to the intersection B. Also, in a case where the hub 4 is positioned the foremost from among the hub 4 and the conductive member electrically connected to the hub 4, the second receptors 22 are disposed so as to be positioned at the rear side with respect to the foremost end of the hub 4.

The second receptors 22 are disposed on the outer circumferential face of the spinner 5 around the conductive member electrically connected to the hub 4. Thus, it is possible to prevent lightning passing through the outer circumferential (lateral) region of the hub 4 from directly striking the conductive member. As a result, it is possible to protect the hub 4 and the various components inside the spinner 5 from lightning strikes, the components including the conductive member electrically connected to the hub 4. Further, it is possible to prevent lightning current not only from flowing into the components disposed inside the spinner 5, but also from flowing through the hub 4 into various components (for example, the main bearing of the main shaft 6 of the wind turbine 1 coupled to the hub 4 of the wind turbine rotor 2) disposed on different positions in the wind turbine 1.

In the exemplary configuration illustrated in FIG. 6A, the first receptor 21 has an annular shape centered at the rotation axis O. There are provided a plurality of the second receptors 22. Specifically, there are three second receptors 22 discretely distributed in the circumferential direction centered at the rotation axis O. Further, each of the second receptors 22 is arranged so that each projected second receptor 22 is positioned within the angular range α between the blade root portions 3b of adjacent blades 3 when being projected on the rotational plane N of the wind turbine rotor 2. Here, lightning passing through the vicinity of the blades 3 of the wind turbine rotor 2 is highly likely to be captured by the blade lightning-protection system 10. There is a possibility, however, that lightning passing through the angular range α between the blade root portions 3b of adjacent blades 3 reaches the spinner 5 without being captured by the blade lightning-protection system 10. Thus, positioning each second receptor 22 as described above so that the projected position of each second receptor 22 is within the angular range α between the blade root portions 3b of the adjacent blades 3 makes it possible to effectively capture lightning by the second receptors 22, the lightning not having been captured by the blade lightning-protection system 10. Also, the second receptors 22 are discretely distributed in the circumferential direction centered at the rotation axis O. Thus, it possible to reduce the weight of the wind turbine rotor 2 by reducing the size of the second receptors 22. Further, in a case where the spinner 5 has a curved shape and a projecting portion 56 is disposed between two adjacent blade-through holes 51, 51, each second receptor 22 may be attached along the slope at the front of each projecting part 56. Attaching the second receptors 22 at the slopes at the front of the projecting parts 56 as described above makes it no longer necessary to curve the second receptors 22 considerably to conform the curved shape of the spinner 5, which makes it possible to employ second receptors 22 of a flat plate-like shape.

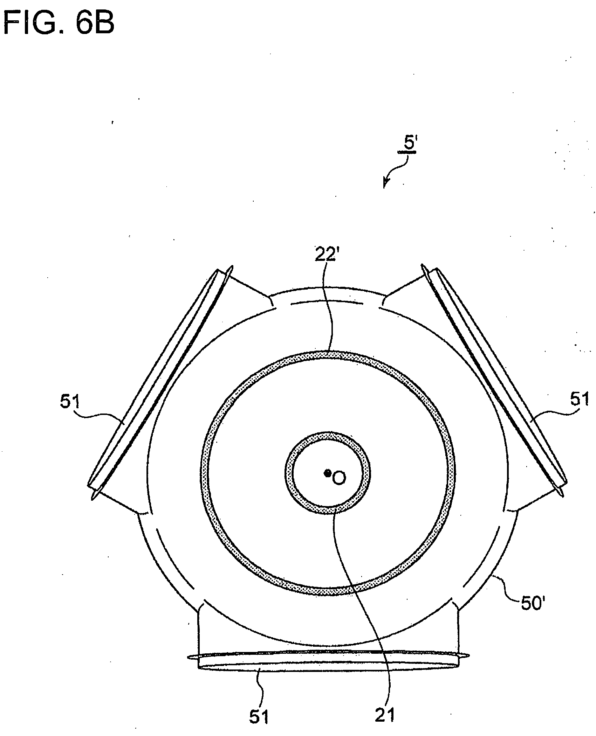

In the exemplary configuration illustrated in FIG. 6B, the first receptor 21 has an annular shape centered at the rotation axis O, and the second receptor 22 similarly has an annular shape centered at the rotation axis O, so that the first receptor 21 and the second receptor 22 form a concentric double circle. Also, the first receptor 21 may be a circular arc centered at the rotation axis O. As a result, it is possible to capture lightning passing through the region over a broad range at the front of the wind turbine rotor 2 by the first receptor 21, thereby achieving the lightning-protection function of the first receptor 21 in the broad range of the stopped position of the wind turbine rotor 2.

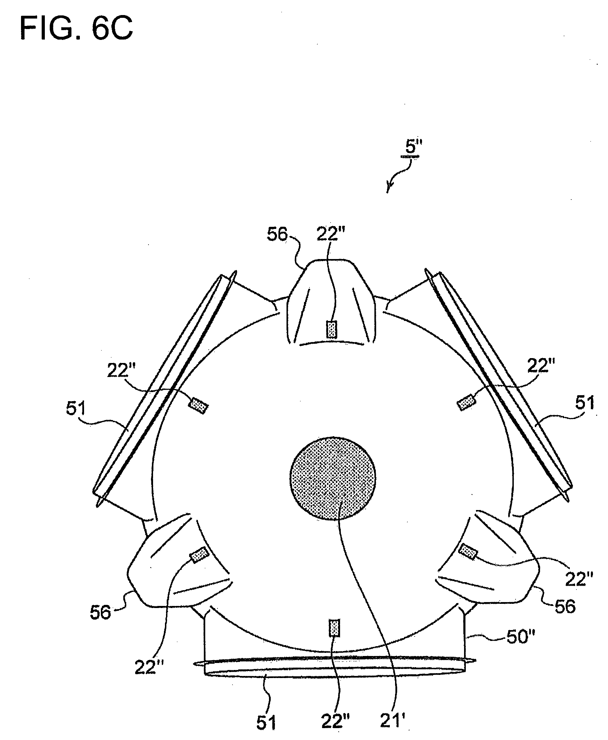

In the exemplary configuration illustrated in FIG. 6C, the first receptor 21' has a circular shape (circular disc-like shape) centered at the rotation axis O. There are six second receptors 22" discretely distributed in the circumferential direction centered at the rotation axis O. The second receptors 22" are arranged so that three of the second receptors 22" are each disposed between two adjacent blade root portions 3b and other three of the second receptors 22" are disposed in the vicinity of the respective blade root portions 3b.

As long as the first receptors 21, 21' and the second receptors 22, 22', 22" are arranged according to the above described conditions, the shape, number, and position of the same are not particularly limited.

In one embodiment, the spinner receptors are embedded into the spinner 5 so as to be exposed on the outer circumferential face of the spinner 5. Also, the steps between the outer circumferential faces of the spinner receptors and the outer circumferential face of the spinner 5 may be reduced in size so that the outer circumferential faces of each spinner receptor and of the spinner 5 continue to each other smoothly.

Embedding the spinner receptors into the spinner 5 as described above makes it possible to prevent the spinner receptors from projecting remarkably outward from the spinner 5 and to reduce aerodynamic loss caused by the spinner receptors.

Further, in one embodiment, the spinner receptors are arranged so as to be electrically isolated from a conductive member (the supporting structure 80, for example) disposed inside the spinner 5. This arrangement may be achieved by separating the spinner receptors from the conductive member by a distance long enough to provide electric isolation therebetween or by interposing an insulator between the spinner receptors and the conductive member.

As a result, it is possible to prevent lightning current from flowing into the conductive member from the spinner receptors and to protect the conductive member disposed in the spinner 5 from lightning strikes.

Further, in one embodiment, the spinner receptors include a stainless material including an antireflection covering layer.

As a result, it is possible to maintain high corrosion resistance of the spinner receptors by use of the stainless material even in harsh circumstances. Also, it is possible to suppress reflection of the sun light by the antireflection covering layer and to reduce influence of reflection on airplanes caused by the spinner receptors. As the antireflection covering layer, matting agent may be used, for instance. This antireflection covering layer may further include corrosion resistance.

Further, in another embodiment, the spinner receptors include a copper material at least partially covered by a corrosive-resistant covering layer.

As a result, it is possible to provide spinner receptors having corrosion resistance as well as high conductivity and excellent lightning-protection performance.

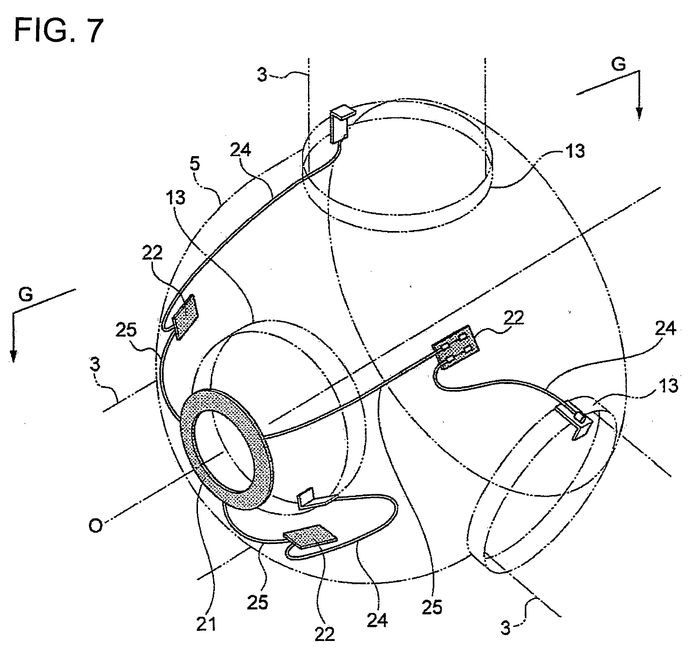

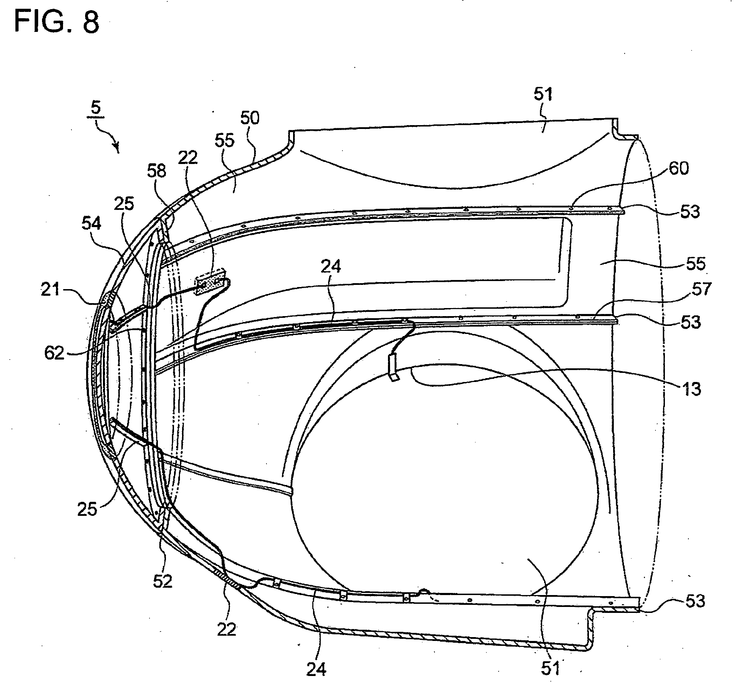

Next, in reference to FIGs. 7 and 8, the configuration for electrically connecting a receptor set and the grounding electric-current path 17 will be described. The receptor set includes the spinner receptors (including the first receptor 21 and the second receptors 22). FIG. 7 is a perspective view of an overall configuration of a spinner lightning-protection system according to one embodiment. FIG. 8 is a cross-sectional view of an example of an installed spinner lightning-protection system according to one embodiment, taken along the line G-G from FIG. 7.

The spinner lightning-protection system 20 in some embodiments includes a receptor set having a plurality of spinner receptors (including the first receptors 21 and the second receptors 22) electrically connected to one another, and at least one first cable 24 for connecting the receptor set to the grounding electric-current path 17 of the wind turbine rotor 2. In an exemplary configuration, the spinner lightning-protection system 20 illustrated in FIGs. 7 and 8 includes one first receptor 21 having an annular shape, three second receptors 22 having a plate-like shape, three first cables 24 for electrically connecting each second receptor 22 and each discharge ring 13, and three second cables 25 for electrically connecting each second receptor 22 and the first receptor 21. The first cables 24 and the second cables 25 may be disposed away from the hub 4 or a conductive member (the supporting structure 80, for instance (see FIG. 2)) electrically connected to the hub 4. In this way, it is possible to protect the conductive member disposed in the spinner 5 from lightning strikes. Specifically, arranging the second cables 25 away by a sufficient distance from the conductive member makes it possible to prevent short circuit from the second cables 25 to the conductive member. Also, the receptor set including the first receptor 21 and the second receptors 22 is connected to the grounding current path 17 through the discharge rings 13.

Connecting the plurality of spinner receptors electrically makes it no longer necessary to provide a first cable 24 connecting to the grounding current path 17 for each spinner receptor individually. Thus, it is possible to standardize the first cables 24 and associated devices. However, the number of the first cables 24 is not limited to one and may be more than one in order to enable usage of cables with relatively low cable ampacity or to make the cables redundant to improve reliability of the spinner lightning-protection system 20.

Further, the spinner receptors of the spinner lightning-protection system 20 are connected to the discharge rings (current transmitting part) 13 of the blade lightning-protection system 10 via the first cables 24 and the second cables 25. In this way, it is possible to direct lightning current from the spinner receptors to the grounding current path 17 on the nacelle 8 side through the discharge rings 13 of the blade lightning-protection system 10. Thus, it is possible to protect the various devices which need to be protected from damage due to lightning current when lightning hits a spinner receptor.

Furthermore, both of the plurality of blade receptors 11 and the plurality of spinner receptors are connected to the grounding current path 17 on the nacelle 8 side through the discharge rings 13 of the blade lightning-protection system 10. Thus, the grounding current path 17 on the nacelle 8 side for directing lightning current can be shared by the blade lightning-protection system 10 and the spinner lightning-protection system 20. As a result, it is possible to simplify the device configuration of the lightning-protection system of the wind turbine rotor 2, and to reduce the weight of the wind turbine rotor 2 in consequence of the reduced number of components.

Still further, two or more spinner receptors from among the plurality of spinner receptors are connected to the respective discharge rings 13 via the respective first cables 24, while the first receptor 21 and each second receptor 22 are electrically connected to each other via corresponding one of the second cables 25. In this way, it is possible to transmit lightning current from the spinner receptors to the discharge rings 13 through the plurality of first cables 24 in a distributed manner. Further, the plurality of spinner receptors are electrically connected to one another via the second cables 25. Thus, providing only one first cable 24 for each of the two or more spinner receptors may be sufficient, which makes it possible to reduce the number of first cables 24 compared to a case where each spinner receptor is individually connected to the corresponding discharge ring 13.

In one embodiment, as illustrated in FIG. 7, one first receptor 21 has a continuous shape in the circumferential direction centered at the rotation axis O, while three second receptors 22 are disposed at the rear side with respect to the first receptor 21 and discretely distributed in the circumferential direction centered at the rotation axis O. The three second receptors 22 are electrically connected to the respective discharge rings 13 through the respective first cables 24. Thus, the second receptors 22 are electrically connected to the grounding current path 17 on the nacelle 8 side via the discharge rings 13. Further, the three second receptors 22 are electrically connected to the first receptor 21 through the second cables 25. Thus, three second receptors 22 are connected radially to the first receptor 21 at the center through the second cables 25. Here, each second receptor 22 is connected to the grounding current path 17 in the wind turbine rotor 2 through the corresponding first cable 24. Thus, when lightning hits one of the receptors 21, 22, the lightning current flows through the three first cables 24 in a distributed manner. As a result, it is possible to restrict the maximum current that flows through the first cables 24, which also makes it possible to use cables with a low cable-ampacity value compared to a case where a single first cable 24 is provided.

As described above, one first cable 24 is provided for each of the plurality of second receptors electrically connected to one another. Thus, when lightning hits any one of the second receptors 22, the lightning current from the hit second receptor 22 flows into not only the first cable 24 provided for the hit second receptor 22 but also the first cables 24 provided for the other second receptors 22, so that the lightning current is distributed. That is, instead of providing a plurality of first cables 24 for each second receptor 22, the first cables 24 for other second receptors 22 not having been hit by lightning are utilized when lightning hits one of the second receptors, so that it possible to reduce the maximum lightning current flowing through each first cable 24.

Further, in a case where the spinner 5 of the wind turbine rotor 2 has a divided structure as already described in FIG. 3, each cable 24, 25 may be arranged so that at least part of each first cable 24 or at least part of each second cable 25 extends along the joint part for joining the sections 54, 55, as illustrated in FIG. 8. In an exemplary configuration, the front section 54 and the plurality of side sections 55 of the spinner 5 include flanges 57, 58 on the end edges at the sides where each section joins another section. Also, the flanges 57, 58 of adjacent two sections are configured to join each other via bolts 60, 62. In the spinner 5 formed in this way, the flange 58 for joining the front section 54 and the plurality of side sections 55 is disposed on a plane perpendicular to the rotation axis O, while the flanges 57 for joining two side sections 55 are disposed along the front-rear direction of the wind turbine rotor 2. Thus, a part of the first cables 24 or a part of the second cables 25 is arranged along the flanges 57, 58. For instance, in FIG. 8, a part of each second cable 25 for connecting the first receptor 21 and one of the second receptors 22 is arranged along the flange 58. Further, a part of the first cables 24 for connecting the second receptors 22 and the discharge rings 13 is arranged along the flanges 57.

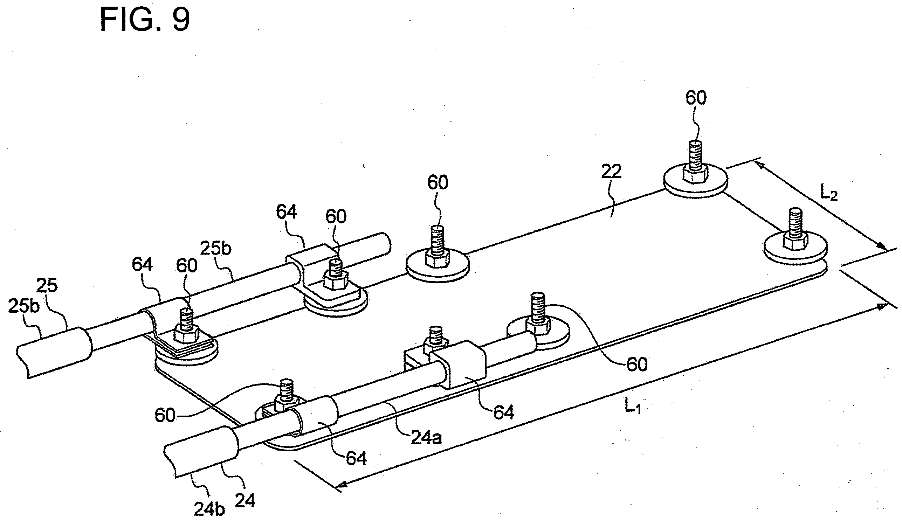

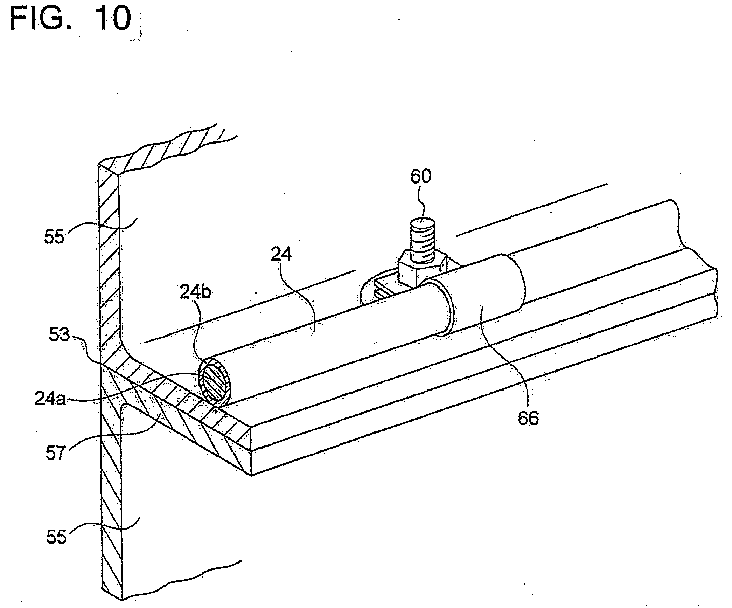

Further, as illustrated in FIGs. 9 and 10, the bolts 60 for connecting the sections 54, 55 of the spinner 5 with each other may be used to fix one of the plurality of first cables 24 or the plurality of second cables 25 on the spinner 5.

FIG. 9 is a perspective view of an attached state of the second receptors and the cables according to one embodiment.

In one embodiment, the second receptor 22 illustrated in FIG. 9 is configured to be attached to the flange 57 (see FIG. 8) of the spinner 5 by a plurality of bolts 60. At this time, fixing jigs 64 are attached to the flange 57 along with the second receptor 22 by the bolts 60. Each fixing jig 64 includes a conducting body and has a configuration for fixing a first cable 24 or a second cable 25. The first cable 24 here has a configuration in which a cable conducting body 24a is covered by an insulating covering layer 24b. The cable conducting body 24a is exposed at the end of the first cable 24, and the first cable 24 is fixed to the fixing jigs 64 by the bolts 60 in a state where the cable conducting body 24a is in contact with the fixing jigs 64. In this way, the first cable 24 and the second receptor 22 are electrically connected via the fixing jigs 64. Similarly, the second cable 25 has a configuration in which a cable conducting body 25a is covered by an insulating covering layer 25b. The cable conducting body 25a is exposed at the end of the second cable 25, and the second cable 25 is fixed to the fixing jigs 64 by the bolts 60 in a state where the cable conducting body 25a is in contact with the fixing jig 64. In this way, the second cable 25 and the second receptor 22 are electrically connected via the fixing jigs 64.

Further, in one embodiment, the second receptor 22 illustrated in FIG. 9 has a shape in which the size L₁ in the first direction is larger than the size L₂ in the second direction orthogonal to the first direction. Also, the second receptor 22 is disposed on the outer circumferential face of the spinner 5 so that the first direction is along the front-rear direction.

In this way, it is possible to extend the outer circumferential (lateral) region around the hub 4 where the lightning-protection function of the second receptors 22 is effective in the front-rear direction. As a result, it becomes possible to capture lightning that passes the region over a broad range of the side region 72 (see FIG. 2) around the hub 4 by the second receptors 22, and to further improve the lightning-protection performance of the wind turbine rotor 2.

FIG. 10 is a perspective view of an attached state of a cable according to one embodiment.

As illustrated in the drawing, in one embodiment, a fixing jig 66 is attached to the spinner 5 by a bolt 60 for joining the flanges 57 of the spinner 5. The fixing jig 66 is configured to fix a first cable 24 or a second cable 25. Contrary to the case illustrated in FIG. 9, the fixing jig 66 is not electrically connected to the first cable 24 or the second cable 25. That is, the fixing jig 66 is configured to fix the first cable 24 or the second cable 25 over the insulating covering layer 24b of the first cable 24 or the insulating covering layer 25b of the second cable 25.

Normally, in a case where the spinner 5 has a divided structure, the joint parts (the flanges 57, 58, for instance) of the sections 54, 55 are often formed to have higher stiffness than that of the other parts in order to secure joint strength. Thus, extending a part of the first cable 24 or a part of the second cable 25 along the joint part makes it possible to prevent reduction in strength of the spinner 5 even when a fixing member such as a bolt for fixing the cables 24, 25 to the spinner 5 is attached thereto. Further, when the joint parts are the flanges 57, 58 as illustrated in FIG. 8, fixing the cables 24, 25 on the wall surfaces (the walls elevating from the inner wall surface of the spinner 5) of the flanges 57, 58 makes it possible to fix the cables 24, 25 by bolts 60, 62 without providing through holes on the spinner body 50. Moreover, using the fixing jigs 64, 64 makes it possible to fix the first cable 24 or the second cable 25 to the spinner 5 by use of the bolts 60, 62 for connecting the sections 54, 55 of the spinner 5 to each other.

As described above, according to the above embodiments, the spinner lightning-protection system 20 is provided separately from the blade lightning-protection system 10, including the spinner receptors (the first receptor 21 and the second receptors 22) disposed on the spinner 5. Thus, it is possible to protect the wind turbine rotor 2 from lightning that has not been captured by the blade lightning-protection system 10 or the like. Also, it is possible to protect the electrical devices disposed in the spinner 5 or the hub 4 from lightning strikes by means of the spinner lightning-protection system 20.

Embodiments of the present invention were described in detail above, but the present invention is not limited thereto, and various amendments and modifications may be implemented within a scope that does not depart from the present invention.

## Claims

1. A wind turbine rotor (2) supported on a nacelle of a wind turbine to be freely rotatable, the wind turbine rotor comprising:
at least two blades (3);
a hub (4) to which the at least two blades (3) are attached;
a spinner (5) disposed so as to cover the hub (4), the spinner (5) including an insulating material;
a blade lightning-protection system (10) provided for each of the at least two blades (3); and
the wind turbine rotor being **characterized in that** it further comprises:
a spinner lightning-protection system (20) provided for the spinner (5), the spinner lightning-protection system (20) including at least one receptor (21,22),
wherein the at least one receptor (21,22) is disposed so that, when being projected on a rotational plane (M) of the wind turbine rotor (2), at least a part of the at least one receptor (21,22) being projected is positioned within an angular range (α) corresponding to a circular-arc region between blade root portions (3b) of adjacent two of the at least two blades (3), the circular-arc region (D) being a portion of a virtual circle (V), on the rotational plane, passing through the blade root portions (3b) of the at least two blades (3), and
wherein the at least one receptor (21,22) is disposed so that, when being projected on a plane including a rotation axis (O) of the wind turbine rotor (2), at least a part of the at least one receptor (21,22) being projected is positioned at a front side with respect of the blade root portions (3b) of the at least two blades (3), the front side being a hub side and a rear side being a nacelle side in an axial direction of the rotation axis (O),
wherein the at least one receptor (21, 22) is disposed on an outer circumferential surface of the spinner (5).

2. The wind turbine rotor (2) according to claim 1, further comprising
a conductive member (80) disposed in the spinner (5), the conductive member (80) being electrically connected to the hub (4),
wherein the at least one receptor (21,22) includes a first receptor (21) disposed on an outer circumferential surface of the spinner (5) at a front side with respect to the hub (4) and the conductive member (80).

3. The wind turbine rotor (2) according to claim 2,
wherein the first receptor (21) has a circular shape, an annular shape, or a circular-arc shape, centered at the rotation axis (O).

4. The wind turbine rotor (2) according to any one of claims 1 to 3, further comprising
a conductive member (80) disposed in the spinner (5), the conductive member being electrically connected to the hub (4),
wherein the at least one receptor (21,22) includes at least one second receptor (22) disposed on the outer circumferential surface of the spinner (5) around the hub (4) and the conductive member (80).

5. The wind turbine rotor (2) according to claim 4,
wherein the at least one receptor (21,22) includes a plurality of the second receptors (22) disposed so as to be separate from each other in a circumferential direction centered at the rotation axis (O), and
wherein each of the second receptors (22) is disposed so that, when being projected on the rotational plane of the wind turbine rotor (2), said each second receptor (22) being projected is positioned within an angular range between the blade root portions (3b) of adjacent two of the at least two blades (3).

6. The wind turbine rotor (2) according to claim 4 or 5,
wherein each second receptor (22) has a shape in which a size in a first direction is larger than a size in a second direction orthogonal to the first direction, and
wherein each second receptor (22) is disposed on the outer circumferential surface of the spinner (5) so that the first direction is along a front-rear direction.

7. The wind turbine rotor (2) according to any one of claims 1 to 6,
wherein the spinner lightning-protection system (20) includes:
a receptor set including a plurality of the receptors electrically connected to one another; and
at least one first cable (24) for connecting to a grounding current path (17) of the wind turbine rotor (2).

8. The wind turbine rotor (2) according to claim 7,
wherein the receptor set includes:
a first receptor (21) which is continuous in the circumferential direction centered at the rotation axis (O); and
a plurality of second receptors (22) disposed so as to be separate from each other in the circumferential direction centered at the rotation axis (O), at a rear side with respect to the first receptor (21), and
wherein the blade lightning-protection system (10) includes:
a plurality of the first cables (24) for electrically connecting respective ones of the second receptors (22) to the grounding current path (17); and
a plurality of second cables (25) for electrically connecting respective ones of the second receptors (22) and the first receptor (21) with each other.

9. The wind turbine rotor (2) according to any one of claims 1 to 8,
wherein the receptor is disposed so as to be electrically isolated from a conductive member disposed in the spinner (5).

10. The wind turbine rotor (2) according to any one of claims 1 to 9,
wherein the receptor includes a stainless material including an antireflection covering layer.

11. The wind turbine rotor (2) according to any one of claims 1 to 10,
wherein the receptor includes a copper material at least a part of which is covered by a corrosion-resistant covering layer.

12. The wind turbine rotor (2) according to any one of claims 1 to 11,
wherein the spinner (5) includes non-conductive fiber-reinforced plastic.

13. The wind turbine rotor (2) according to any one of claims 1 to 12,
wherein the hub (4) includes cast steel, and
wherein the receptor is electrically isolated from the hub (4).

14. A wind turbine (1) comprising:
a nacelle (8) to which the wind turbine rotor (2) according to claims 1 to 13 is supported to be freely rotatable.

## Patentansprüche

1. Windturbinenrotor (2), der so an einer Gondel einer Windturbine gestützt wird, dass er sich frei drehen kann, wobei der Windturbinenrotor umfasst:
mindestens zwei Flügel (3),
eine Nabe (4), an denen die mindestens zwei Flügel (3) angebracht sind,
eine Rotorhaube (5), die so angeordnet ist, dass sie die Nabe (4) bedeckt,
wobei die Rotorhaube (5) ein isolierendes Material enthält,
ein Flügel-Blitzschutzsystem (10), das für jeden der mindestens zwei Flügel (3) bereitgestellt ist, und
wobei der Windturbinenrotor **dadurch gekennzeichnet, dass** er ferner umfasst:
ein Rotorhauben-Blitzschutzsystem (20), das für die Rotorhaube (5) bereitgestellt ist, wobei das Rotorhauben-Blitzschutzsystem (20) mindestens einen Rezeptor (21, 22) enthält,
wobei der mindestens eine Rezeptor (21, 22) so angeordnet ist, dass, wenn er auf eine Rotationsebene (M) des Windturbinenrotors (2) projiziert wird, mindestens ein Teil des mindestens einen projizierten Rezeptors (21, 22) innerhalb eines Winkelbereichs (α) positioniert ist, der einer Kreisbogenregion zwischen Flügelwurzelabschnitten (3b) von benachbarten zwei der mindestens zwei Flügel (3) entspricht, wobei die Kreisbogenregion (D) ein Abschnitt eines virtuellen Kreises (V) auf der Rotationsebene ist, der durch die Flügelwurzelabschnitte (3b) der mindestens zwei Flügel (3) verläuft, und
wobei der mindestens eine Rezeptor (21, 22) so angeordnet ist, dass, wenn er auf eine Ebene projiziert wird, die eine Rotationsachse (O) des Windturbinenrotors (2) enthält, mindestens ein Teil des mindestens einen projizierten Rezeptors (21, 22) auf einer Vorderseite mit Bezug auf die Flügelwurzelabschnitte (3b) der mindestens zwei Flügel (3) positioniert ist, wobei die Vorderseite eine Nabenseite und eine Rückseite eine Gondelseite in einer axialen Richtung der Rotationsachse (O) ist,
wobei der mindestens eine Rezeptor (21, 22) auf einer Außenumfangsfläche der Rotorhaube (5) angeordnet ist.

2. Windturbinenrotor (2) nach Anspruch 1, ferner umfassend:
ein leitfähiges Element (80), das in der Rotorhaube (5) angeordnet ist, wobei das leitfähige Element (80) elektrisch mit der Nabe (4) verbunden ist,
wobei der mindestens eine Rezeptor (21, 22) einen ersten Rezeptor (21) enthält, der auf einer Außenumfangsfläche der Rotorhaube (5) auf einer Vorderseite mit Bezug auf die Nabe (4) und das leitfähige Element (80) angeordnet ist.

3. Windturbinenrotor (2) nach Anspruch 2,
wobei der erste Rezeptor (21) eine kreisrunde Form, eine Ringform oder eine Kreisbogenform hat, die an der Rotationsachse (O) zentriert ist.

4. Windturbinenrotor (2) nach einem der Ansprüche 1 bis 3, ferner umfassend:
ein leitfähiges Element (80), das in der Rotorhaube (5) angeordnet ist, wobei das leitfähige Element elektrisch mit der Nabe (4) verbunden ist,
wobei der mindestens eine Rezeptor (21, 22) mindestens einen zweiten Rezeptor (22) enthält, der an der Außenumfangsfläche der Rotorhaube (5) um die Nabe (4) und das leitfähige Element (80) herum angeordnet ist.

5. Windturbinenrotor (2) nach Anspruch 4,
wobei der mindestens eine Rezeptor (21, 22) mehrere der zweiten Rezeptoren (22) enthält, die so angeordnet sind, dass sie in einer Umfangsrichtung, die an der Rotationsachse (O) zentriert ist, voneinander getrennt sind, und
wobei jeder der zweiten Rezeptoren (22) so angeordnet ist, dass, wenn sie auf die Rotationsebene des Windturbinenrotors (2) projiziert werden, jeder zweite projizierte Rezeptor (22) innerhalb eines Winkelbereichs zwischen den Flügelwurzelabschnitten (3b) von benachbarten zwei der mindestens zwei Flügel (3) positioniert ist.

6. Windturbinenrotor (2) nach Anspruch 4 oder 5,
wobei jeder zweite Rezeptor (22) eine Form hat, bei der eine Größe in einer ersten Richtung größer ist als eine Größe in einer zweiten Richtung orthogonal zu der ersten Richtung, und
wobei jeder zweite Rezeptor (22) so an der Außenumfangsfläche der Rotorhaube (5) angeordnet ist, dass die erste Richtung entlang einer Vorderseite-Rückseite-Richtung verläuft.

7. Windturbinenrotor (2) nach einem der Ansprüche 1 bis 6,
wobei das Rotorhauben-Blitzschutzsystem (20) enthält:
einen Rezeptorsatz, der mehrere der Rezeptoren enthält, die elektrisch miteinander verbunden sind, und
mindestens ein erstes Kabel (24) zum Verbinden mit einem Erdungsstrompfad (17) des Windturbinenrotors (2).

8. Windturbinenrotor (2) nach Anspruch 7,
wobei der Rezeptorsatz enthält:
einen ersten Rezeptor (21), der kontinuierlich in der Umfangsrichtung verläuft, die auf der Rotationsachse (O) zentriert ist, und
mehrere zweite Rezeptoren (22), die so angeordnet sind, dass sie in der Umfangsrichtung, die auf der Rotationsachse (O) zentriert ist, auf einer Rückseite mit Bezug auf den ersten Rezeptor (21) voneinander getrennt sind, und
wobei das Flügel-Blitzschutzsystem (10) enthält:
mehrere der ersten Kabel (24) zum elektrischen Verbinden jeweiliger der zweiten Rezeptoren (22) mit dem Erdungsstrompfad (17), und
mehrere zweite Kabel (25) zum elektrischen Verbinden jeweiliger der zweiten Rezeptoren (22) und der ersten Rezeptor (21) miteinander.

9. Windturbinenrotor (2) nach einem der Ansprüche 1 bis 8,
wobei der Rezeptor so angeordnet ist, dass er elektrisch von einem leitfähigen Element, das in der Rotorhaube (5) angeordnet ist, isoliert ist.

10. Windturbinenrotor (2) nach einem der Ansprüche 1 bis 9,
wobei der Rezeptor ein Edelstahlmaterial enthält, das eine reflexionsmindernde Überzugsschicht enthält.

11. Windturbinenrotor (2) nach einem der Ansprüche 1 bis 10,
wobei der Rezeptor ein Kupfermaterial enthält, das mindestens teilweise mit einer korrosionsbeständigen Deckschicht überzogen ist.

12. Windturbinenrotor (2) nach einem der Ansprüche 1 bis 11,
wobei die Rotorhaube (5) einen nichtleitenden faserverstärkten Kunststoff enthält.

13. Windturbinenrotor (2) nach einem der Ansprüche 1 bis 12,
wobei die Nabe (4) Gussstahl enthält, und
wobei der Rezeptor elektrisch von der Nabe (4) isoliert ist.

14. Windturbine (1), umfassend:
eine Gondel (8), an der der Windturbinenrotor (2) nach den Ansprüchen 1 bis 13 so gestützt wird, dass er sich frei drehen kann.

## Revendications

1. Rotor d'éolienne (2) supporté sur une nacelle d'une éolienne pour être librement rotatif, le rotor d'éolienne comprenant :
au moins deux pales (3) ;
un moyeu (4) sur lequel les au moins deux pales (3) sont fixées ;
un disque de moyeu (5) disposé pour recouvrir le moyeu (4), le disque de moyeu (5) comprenant un matériau isolant ;
un système de protection contre la foudre de pale (10) prévu pour chacune des au moins deux pales (3) ; et
le rotor d'éolienne étant **caractérisé en ce qu'**il comprend en outre :
un système de protection contre la foudre de disque de moyeu (20) prévu pour le disque de moyeu (5), le système de protection contre la foudre de disque de moyeu (20) comprenant au moins un dispositif de réception (21, 22),
dans lequel le au moins un dispositif de réception (21, 22) est disposé de sorte que, lorsqu'il fait saillie sur un plan de rotation (M) du rotor d'éolienne (2), au moins une partie du au moins un dispositif de réception (21, 22) qui fait saillie, est positionnée dans une plage angulaire (α) correspondant à une région d'arc circulaire entre les parties d'emplanture de pale (3b) des deux pales adjacentes des au moins deux pales (3), la région d'arc circulaire (D) étant une partie d'un cercle virtuel (V), sur le plan de rotation, passant par les parties d'emplanture de pale (3b) des au moins deux pales (3), et
dans lequel le au moins un dispositif de réception (21, 22) est disposé de sorte que, lorsqu'il fait saillie sur un plan comprenant un axe de rotation (0) du rotor d'éolienne (2), au moins une partie du au moins un dispositif de réception (21, 22) qui fait saillie, est positionnée au niveau d'un côté avant par rapport aux parties d'emplanture de pale (3b) des au moins deux pales (3), le côté avant étant un côté de moyeu et un côté arrière étant un côté de nacelle dans une direction axiale de l'axe de rotation (0),
dans lequel le au moins un dispositif de réception (21, 22) est disposé sur une surface circonférentielle externe du disque de moyeu (5).

2. Rotor d'éolienne (2) selon la revendication 1, comprenant en outre
un élément conducteur (80) disposé dans le disque de moyeu (5), l'élément conducteur (80) étant électriquement connecté au moyeu (4),
dans lequel le au moins un dispositif de réception (21, 22) comprend un premier dispositif de réception (21) disposé sur une surface circonférentielle externe du disque de moyeu (5) au niveau d'un côté avant par rapport au moyeu (4) et à l'élément conducteur (80).

3. Rotor d'éolienne (2) selon la revendication 2,
dans lequel le premier dispositif de réception (21) a une forme circulaire, une forme annulaire ou une forme d'arc circulaire, centrée au niveau de l'axe de rotation (0).

4. Rotor d'éolienne (2) selon l'une quelconque des revendications 1 à 3, comprenant en outre
un élément conducteur (80) disposé dans le disque de moyeu (5), l'élément conducteur étant électriquement raccordé au moyeu (4),
dans lequel le au moins un dispositif de réception (21, 22) comprend au moins un second dispositif de réception (22) disposé sur la surface circonférentielle externe du disque de moyeu (5) autour du moyeu (4) et de l'élément conducteur (80).

5. Rotor d'éolienne (2) selon la revendication 4,
dans lequel le au moins un dispositif de réception (21, 22) comprend une pluralité de seconds dispositifs de réception (22) disposés afin d'être séparés les uns des autres dans une direction circonférentielle centrée au niveau de l'axe de rotation (0), et
dans lequel chacun des seconds dispositifs de réception (22) est disposé de sorte que, lorsqu'il fait saillie sur le plan de rotation du rotor d'éolienne (2), ledit second dispositif de réception (22) qui fait saillie est positionné dans une plage angulaire entre les parties d'emplanture de pale (3b) de deux pales adjacentes des au moins deux pales (3).

6. Rotor d'éolienne (2) selon la revendication 4 ou 5,
dans lequel chaque second dispositif de réception (22) a une forme dans laquelle une taille, dans une première direction, est supérieure à une taille dans une seconde direction orthogonale à la première direction, et
dans lequel chaque second dispositif de réception (22) est disposé sur la surface circonférentielle externe du disque de moyeu (5) de sorte que la première direction est le long d'une direction avant-arrière.

7. Rotor d'éolienne (2) selon l'une quelconque des revendications 1 à 6,
dans lequel le système de protection contre la foudre de disque de moyeu (20) comprend :
un ensemble de dispositifs de réception comprenant une pluralité de dispositifs de réception électriquement raccordés les uns aux autres ; et
au moins un premier câble (24) pour se raccorder à une trajectoire de courant de terre (17) du rotor d'éolienne (2).

8. Rotor d'éolienne (2) selon la revendication 7,
dans lequel l'ensemble de dispositifs de réception comprend :
un premier dispositif de réception (21) qui est continu dans la direction circonférentielle centrée au niveau de l'axe de rotation (0) ; et
une pluralité de seconds dispositifs de réception (22) disposés afin d'être séparés les uns des autres dans une direction circonférentielle centrée au niveau de l'axe de rotation (0), au niveau d'un côté arrière par rapport au premier dispositif de réception (21), et
dans lequel le système de protection contre la foudre de pale (10) comprend :
une pluralité de premiers câbles (24) pour raccorder électriquement les câbles respectifs des seconds dispositifs de réception (22) à la trajectoire de courant de terre (17) ; et
une pluralité de seconds câbles (25) pour raccorder électriquement des câbles respectifs des seconds dispositifs de réception (22) et le premier dispositif de réception (21) entre eux.

9. Rotor d'éolienne (2) selon l'une quelconque des revendications 1 à 8,
dans lequel le dispositif de réception est disposé afin d'être électriquement isolé d'un élément conducteur disposé dans le disque de moyeu (5).

10. Rotor d'éolienne (2) selon l'une quelconque des revendications 1 à 9,
dans lequel le dispositif de réception comprend un matériau inoxydable comprenant une couche de recouvrement antireflet.

11. Rotor d'éolienne (2) selon l'une quelconque des revendications 1 à 10,
dans lequel le dispositif de réception comprend un matériau en cuivre, dont au moins une partie est recouverte par une couche de recouvrement résistante à la corrosion.

12. Rotor d'éolienne (2) selon l'une quelconque des revendications 1 à 11,
dans lequel le disque de moyeu (5) comprend un plastique renforcé en fibres non conducteur.

13. Rotor d'éolienne (2) selon l'une quelconque des revendications 1 à 12,
dans lequel le moyeu (4) comprend de l'acier moulé, et
dans lequel le dispositif de réception est électriquement isolé du moyeu (4).

14. Eolienne (1) comprenant :
une nacelle (8) sur laquelle le rotor d'éolienne (2) selon les revendications 1 à 13, est supporté pour pouvoir tourner librement.
